# FASCICULE DE BREVET EUROPEEN

(11) **EP 0 623 561 B1**
(45) Date de publication et mention de la délivrance du brevet: **06.08.1997**
(21) Numéro de dépôt: 94400576.8
(22) Date de dépôt: 16.03.1994
(51) Int. Cl.: C02F 9/00, C02F 1/68, B01D 61/00

(54) **Procédé et dispositif de décontamination d'effluents liquides contenant des métaux sous forme ionique**
Verfahren und Vorrichtung zur Dekontaminierung von Flüssigkeiten die ionische Metalle enthalten
Process and device for decontaminating a liquid effluent containing ionic metals

(30) Priorité: 05.04.1993 FR 9304008
(43) Date de publication de la demande: 09.11.1994
(73) Titulaire: ELECTRICITE DE FRANCE Service National, 75008 Paris (FR)
(72) Inventeur: Leclerc, Olivier, F-77210 Avon (FR); Laurent, Marie-Hèlène, F-77810 Thomery (FR); Sarrazin, Jean, F-34980 Montferrier sur Lez (FR); Persin, Michel, F-34980 Saint-Clement-la-Riviere (FR); Niessen, Sylvie, F-34000 Montpellier (FR)
(74) Mandataire: Gutmann, Ernest

(56) Documents cités:
- FR-A- 2 392 942
- FR-A- 2 533 233
- FR-A- 2 567 914

## Description

La présente invention concerne un procédé et un dispositif de décontamination en continu d'effluents liquides contenant des métaux sous forme ionique.

Elle trouve une application particulièrement importante bien que non exclusive dans le domaine de la dépollution d'importants volumes de solution chargée en cations métalliques, en vue de la récupération de ces derniers.

On connaît déjà des procédés d'épuration d'effluents contenant des métaux sous forme ionique.

Par exemple il existe un procédé consistant à traiter les solutions par formation et précipitation d'hydroxydes métalliques, que l'on sépare ensuite du liquide épuré par centrifugation ou filtration. Si un tel procédé permet de traiter des quantités importantes d'effluents, il présente néanmoins l'inconvénient de générer une pollution solide formée par les boues d'hydroxydes.

On connaît également des procédés qui évitent la formation de telles boues d'hydroxydes.

La filtration sur résine échangeuse d'ions permet par exemple de traiter des effluents présentant une concentration initiale en ions métalliques très faible, tout en autorisant une récupération du métal en solution concentrée.

Un tel procédé nécessite cependant la régénération des colonnes échangeuses d'ions utilisées, et n'est par ailleurs pas adapté au traitement de volumes importants.

On connaît également une technique dite de cémentation qui consiste à générer une réaction d'oxydo-réduction entre les ions métalliques dissous dans les effluents et un métal réducteur.

Cette technique ne permet cependant pas, en général et à elle seule, de décontaminer suffisamment un liquide pour répondre aux normes de rejet en vigueur fixées de façon de plus en plus sévère par la législation.

D'autres procédés existent également, mais qui présentent tous l'inconvénient de ne pas autoriser une décontamination suffisante, et en continu, d'importants volumes d'effluents.

Il s'agit notamment des techniques de séparation comme l'ultrafiltration ou l'osmose inverse, et de l'électrolyse.

On connaît également (FR-A-2.533.233) un procédé qui consiste à complexer les ions métalliques, à filtrer par ultrafiltration le sel complexe ainsi formé et enfin à effectuer une électrolyse dudit sel complexe.

Ce procédé qui permet de traiter d'importants volumes d'effluents initialement faiblement chargés en cations métalliques s'est cependant révélé difficilement exploitable industriellement, car les vitesses de traitement obtenues sont très faibles.

La présente invention vise à fournir un procédé et un dispositif de décontamination d'effluents liquides pollués par un ou plusieurs contaminants métalliques, en vue de leur récupération, répondant mieux que ceux antérieurement connus aux exigences de la pratique, notamment en ce qu'elle autorise une décontamination efficace d'importants volumes d'effluents en continu (par exemple de l'ordre de 100m³/h), et ce indépendamment de la concentration initiale en polluant qui peut être très faible (par exemple < 50mg/l).

De plus l'invention permet de réaliser une décontamination sélective entre divers cations métalliques, ce qui rend possible leur récupération séparée.

Dans ce but la présente invention propose essentiellement un procédé de décontamination en continu d'un effluent liquide pollué par un ou plusieurs contaminants constitués par des cations d'au moins un métal, dans lequel :
- on ajoute un premier complexant à l'effluent liquide pour former un premier sel complexe dudit métal présentant une taille moléculaire minimale déterminée,
- on sépare l'effluent liquide du premier sel complexe sur une première membrane semi-perméable dont le seuil de coupure est inférieur à la taille moléculaire minimale déterminée, pour former d'un coté un premier perméat constituant l'effluent liquide décontaminé, et de l'autre coté un premier rétentat contenant le premier sel complexe, et
- on réalise une électrolyse d'une solution issue du premier rétentat dite solution à électrolyser, pour récupérer ledit métal,
caractérisé en ce que, après la séparation entre l'effluent liquide et le premier sel complexe,
- on effectue une décomplexation du premier sel complexe, et
- on sépare le premier complexant ainsi récupéré des cations dudit métal sur une seconde membrane semi-perméable dont le seuil de coupure est inférieur à la taille moléculaire minimale du premier complexant récupéré, pour former d'un coté un second rétentat contenant ledit premier complexant récupéré qu'on réutilise, et de l'autre coté un second perméat dont est issue ladite solution à électrolyser.

Dans des modes de réalisation avantageux, on a de plus recours à l'une et/ou à l'autre des dispositions suivantes :
- on effectue, après séparation entre le premier complexant récupéré et les cations du métal, une seconde complexation desdits cations par ajout d'un second complexant propre à favoriser la vitesse d'épuration par électrolyse du second sel complexe ainsi formé et on récupère le second complexant à partir de ladite électrolyse, qu'on réutilise pour ladite seconde complexation ;
- le procédé est appliqué à la récupération du Nickel ;
- on effectue, simultanément à la décomplexation du premier complexant, une seconde complexation des cations dudit métal par ajout d'un second complexant propre à favoriser la vitesse d'épuration par électrolyse du second sel complexe ainsi formé, avant séparation du premier complexant d'avec le second sel complexe formé avec les cations dudit métal sur ladite seconde membrane, pour former ladite solution à électrolyser, et
on récupère le second complexant à partir de l'électrolyse, qu'on réutilise pour ladite seconde complexation ;
- le procédé est appliqué à la récupération du Zinc ;
- on réalise l'électrolyse directement à partir du second perméat contenant les cations dudit métal obtenus à partir de la séparation entre le premier complexant et lesdits cations ;
- le procédé est appliqué à la récupération du Cuivre ;
- la séparation se fait, au moins en partie, par ultra-filtration ;
- la séparation se fait, au moins en partie, par osmose inverse ;
- la séparation se fait, au moins en partie, par nano-filtration ;
- on réalise des décontaminations sélectives en complexant préférentiellement un type de cations métalliques par rapport à un autre.

L'invention propose également un dispositif de décontamination en continu d'un effluent liquide pollué par un ou plusieurs contaminants constitués par des cations d'au moins un métal, comprenant
- des moyens d'alimentation en effluent d'un premier réacteur de complexation,
- ledit premier réacteur muni de moyens d'introduction d'un premier complexant,
- des moyens de transfert de l'effluent porteur des cations dudit métal complexés dans le premier réacteur, ou premier sel complexe, à une première unité de séparation entre effluent liquide et premier sel complexe,
- ladite première unité de séparation comprenant une membrane semi-perméable dont le seuil de coupure est inférieur à la taille moléculaire minimale dudit premier sel complexe, pour former d'un coté un premier perméat liquide décontaminé, et de l'autre coté un premier rétentat contenant le premier sel complexe,
- des moyens d'évacuation dudit premier perméat décontaminé,
- des moyens de transfert dudit premier rétentat vers une cuve à électrolyse,
- ladite cuve à électrolyse, et
- des moyens de récupération dudit métal à partir de ladite cuve à électrolyse,
caractérisé en ce qu'il comporte
- une unité de décomplexation du premier sel complexe,
- une seconde unité de séparation comprenant une seconde membrane semi-perméable dont le seuil de coupure est inférieur à la taille moléculaire minimale du premier complexant récupéré, pour former d'un coté un second rétentat contenant le premier complexant récupéré, et de l'autre coté un second perméat,
- des moyens de recyclage du second complexant ainsi récupéré et,
- des moyens de transfert dudit second perméat vers ladite cuve à électrolyse,

Avantageusement la cuve à électrolyse est mono-compartiment.

Avantageusement également le dispositif comporte un second réacteur de complexation desdits cations muni de moyens d'introduction d'un second complexant propre à favoriser la vitesse d'épuration par électrolyse du second sel complexe ainsi formé et des moyens de recyclage du second complexant à partir de ladite électrolyse.

Dans un autre mode de réalisation avantageux, l'unité de décomplexation comprend des moyens d'introduction d'un second complexant propre à favoriser la vitesse d'épuration par électrolyse du second sel complexe ainsi formé, la seconde unité de séparation étant alors agencée pour séparer le premier complexant récupéré du second sel complexe, et des moyens de recyclage du second complexant à partir de ladite électrolyse étant par ailleurs prévus.

Dans un autre mode de réalisation également avantageux, le dispositif comporte des moyens de transfert direct du second perméat contenant les cations dudit métal obtenus à partir de la seconde unité de séparation, à la cuve d'électrolyse.

Avantageusement le dispositif comporte, de plus, au moins une unité de complexation supplémentaire permettant de récupérer sélectivement un ou plusieurs types de cations métalliques provenant de métaux différents à partir d'un même effluent liquide.

L'invention sera mieux comprise à la lecture de modes particuliers de réalisation donnés à titre d'exemple non limitatif.

La description se réfère aux dessins qui l'accompagnent dans lesquels :
- La figure 1 est un schéma de principe d'un premier mode de réalisation d'un dispositif selon l'invention.
- La figure 2 est un schéma de principe d'un second mode de réalisation du dispositif selon l'invention.

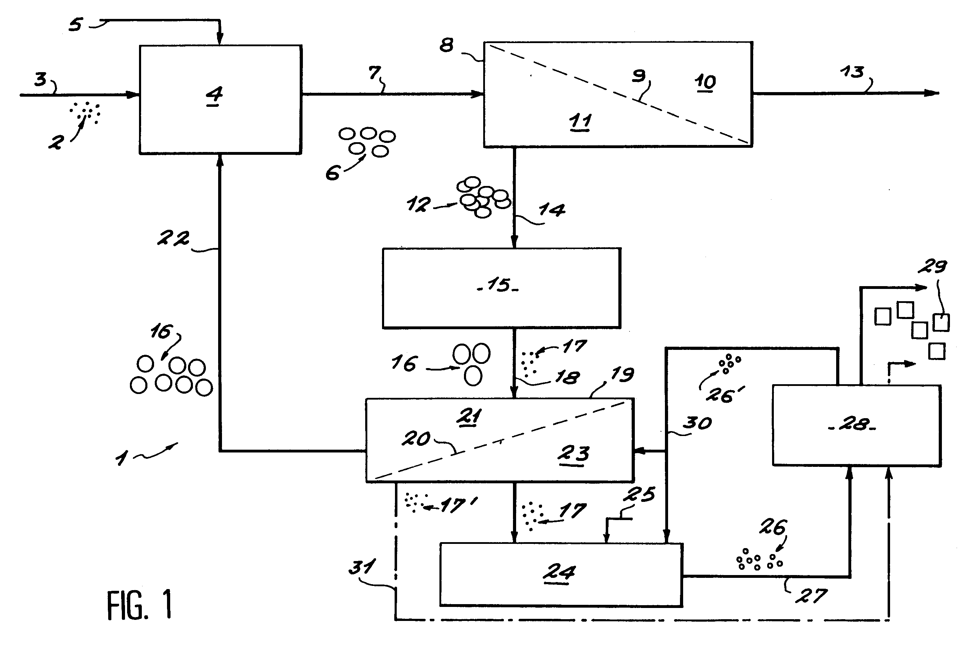

La figure 1 montre schématiquement un dispositif 1 de décontamination d'un effluent liquide, pollué par un ou plusieurs contaminants constitués par des cations métalliques représentés schématiquement en 2 sur la figure.

Il comprend des moyens 3 d'alimentation en effluents d'un premier réacteur 4 de complexation muni de moyens 5 d'introduction d'un premier complexant par exemple d'un complexant dit macromoléculaire.

Le complexant doit en fait posséder une taille supérieure au seuil de coupure de la membrane utiisée pour la séparation.

Dans le cas des membranes d'ultrafiltration, plus particulièrement décrit ici, ce complexant sera macromoléculaire, mais dans le cas des membranes de filtration plus classiques, le complexant pourra être d'une taille nettement inférieure.

Parmi les complexants macromoléculaires les plus connus on peut citer notamment l'acide polyacrylique et la polyéthylèneimine.

Le choix du complexant est en fait déterminé de façon connue en elle-même par la masse moléculaire du complexe métallique à obtenir et par la stabilité thermodynamique de la macromolécule formée (stabilité indispensable pour réaliser une rétention quantitative des cations métalliques présents dans l'effluent).

Un premier sel complexe représenté schématiquement en 6 sur la figure 1 est alors formé dans le réacteur 4 de façon connue en elle-même.

Il est ensuite repris par des moyens 7 de transfert de l'effluent porteur dudit premier sel complexe qui l'injectent dans une première unité 8 de séparation comprenant une membrane 9 semi-perméable.

Il peut s'agir d'une unité dite d'ultrafiltration, d'une unité dite d'osmose inverse ou d'une unité dite de nanofiltration. Toutes ces unités mettent en effet en oeuvre des membranes de porosité telles qu'elles laissent passer les particules de faible poids moléculaire et retiennent les autres. Les molécules de sels métalliques simples étant de taille nettement inférieure au seuil de coupures des membranes en général utilisées, la complexation desdits sels permet de former, au sein des effluents à traiter, un sel complexe dont la taille moléculaire est nettement supérieure (par exemple 100 fois supérieure) au seuil de coupure de la membrane utilisée, ce qui permet donc la séparation entre les cations métalliques complexés et les effluents proprement dits, qui sont ainsi décontaminés.

L'unité 8 forme donc d'un côté un premier perméat liquide 10 qui constitue les effluents décontaminés, et de l'autre côté un premier rétentat 11 composé d'une solution concentrée de cations métalliques complexés par la molécule macromoléculaire, ou premier sel complexe, représenté schématiquement en 12 sur la figure 1.

Le dispositif 1 comprend des moyens 13 d'évacuation du premier perméat décontaminé qui peut par exemple être rejeté dans l'environnement directement ou via un réservoir tampon (non représenté), et des moyens 14 de transfert du premier rétentat vers une unité 15 de décomplexation du premier sel complexe 12.

On y réalise la décomplexation du premier sel complexe macromoléculaire de façon adaptée et connue en elle-même, par exemple par un changement de pH de la solution.

On obtient alors une solution contenant d'un côté le complexant régénéré 16 et de l'autre côté les cations métalliques décomplexés 17, solution qui est transférée en 18 dans une seconde unité de séparation 19 à membrane semi-perméable 20.

Dans le mode de réalisation plus particulièrement décrit ici, le complexant régénéré 16 inclus dans un second rétentat 21 est réinjecté en 22 dans le réacteur 4 où il est réutilisé.

Les cations 17 inclus dans le second perméat 23 sont quant à eux transférés à un second réacteur 24 de complexation.

Le second perméat y est mis en contact avec un second complexant (introduit en 25) favorisant la vitesse interne d'épuration par électrolyse du second sel complexe ainsi formé (représenté schématiquement en 26 sur la figure 1).

Le dispositif 1 comprend des moyens 27 de transfert du second perméat vers une cuve 28 d'électrolyse mono-compartiment.

On y réalise simultanément l'électro-déposition du métal représenté en 29 sur la figure 1 et la régénération du second complexant ou complexant d'électrolyse introduit en 25, qui forme alors le complexant régénéré 26' et est recyclé via les moyens de recyclage 30 dans le second réacteur 24.

La nature du complexant d'électrolyse doit répondre à plusieurs critères :
- permettre une complexation quantitative et sélective du cation métallique,
- donner naissance à un sel complexe formé avec le cation métallique, qui doit être électroactif et présenter un coefficient de diffusion suffisamment élevé pour permettre son électrolyse aisée avec un haut rendement,
- autant que possible, ne pas être oxydable soit directement soit indirectement (par l'oxygène ou le chlore) à l'anode.

Dans ce dernier cas, il est ainsi possible d'éviter l'emploi d'un électrolyseur à 2 compartiments.

La deuxième étape de complexation est mise en oeuvre lorsque la nature du cation métallique à réduire le requiert. Par exemple, il sera a priori inutile de complexer le cation Cu²⁺ après l'élimination du complexant macromoléculaire car ce cation est directement électroactif. Dans ce cas (voir chemin 31 en trait mixte sur la figure 1), on se contentera de réaliser une électrolyse du perméat juste après l'étape 19 de séparation par ultrafiltration (ou par osmose inverse ou par nanofiltration) des molécules de complexant d'une part et des cations métalliques d'autre part.

En revanche, dans le cas d'un métal difficile à électrolyser et hautement valorisable comme le nickel, on réalise tout d'abord le premier sel complexe macromoléculaire ci-dessus mentionné avec par exemple un polyacrylate, puis, après séparation du premier sel complexe du flux principal par ultrafiltration (ou par osmose inverse ou par nanofiltration) en 8, on décomplexe l'ion Ni²⁺ en 15 en passant en milieu acide.

Après une deuxième séparation en 19, où on sépare les cations métalliques 17 et le complexant macromoléculaire 16 par ultrafiltration (ou par osmose inverse ou par nanofiltration), on introduit alors en 25 un tampon ammoniacal pour former le complexe électroactif nickel-ammoniaque 26.

L'électrolyse de ce second sel complexe en 28 conduit à la formation de nickel métal en 29 et à la régénération du tampon ammoniacal 26'.

Ce complexant minéral correspond en effet aux différents critères énumérés précédemment, notamment il n'est pas dégradé à l'anode, ce qui permet ainsi d'utiliser un électrolyseur mono-compartiment.

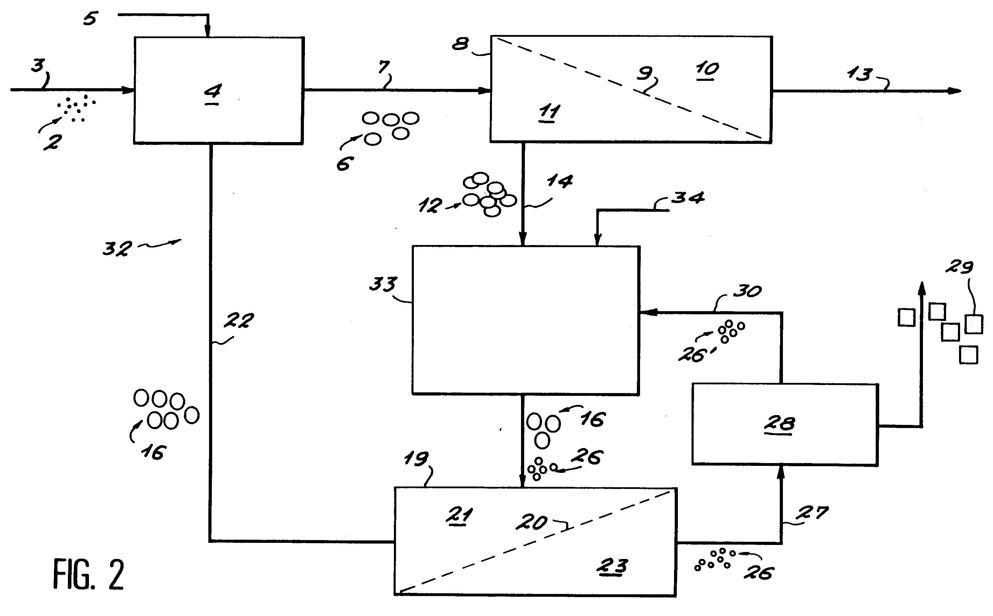

On a représenté sur la figure 2 un autre mode de réalisation d'un dispositif 32 selon l'invention. Pour simplifier, les mêmes numéros de référence que pour la figure 1 ont été utilisés lorsqu'il s'agissait de représenter des éléments identiques à ceux de la figure 1.

La différence essentielle existant entre ce dispositif et le dispositif 1 précédemment décrit réside dans le réacteur 33, qui remplace le réacteur 15, et qui comporte des moyens 34 d'introduction du second complexant directement et simultanément à la décomplexation du premier sel complexe 12. Le second réacteur 24 a donc, et de ce fait, été supprimé.

Un tel dispositif convient au traitement d'effluents chargés en zinc qui est complexé et décomplexé en milieu alcalin, le complexe électroactif formé étant ZnO₂²⁺.

L'un des avantages principaux de l'invention réside dans la possibilité de traiter un effluent industriel en continu et en ligne avec un gros débit (c'est-à-dire avec un débit supérieur à 5 m³/h, par exemple 30 m³/h). En effet, au vu des figures 1 et 2, on constate que le flux polluant est directement traité et ne fait pas l'objet d'une épuration par épuisement.

Le procédé de l'invention permet donc d'épurer rapidement d'importants volumes de solutions chargées en métaux et ce indépendamment de la concentration initiale en polluant qui peut varier de quelques grammes par litre à quelques milligrammes par litre, et ce pour atteindre, après épuration, de l'ordre du milligramme par litre, voire moins.

De plus, il est possible de réaliser des épurations sélectives en choisissant le complexant macromoléculaire (ou minéral) de manière à complexer préférentiellement un cation métallique plutôt qu'un autre.

De cette façon, il sera possible de récupérer séparément et sélectivement différents cations métalliques dans un effluent contaminé par plusieurs métaux.

Pour ce faire, on placera consécutivement plusieurs modules de complexation sur l'écoulement de la solution à épurer.

Avec l'invention, il est également possible d'obtenir un rendement faradique d'électrolyse proche de l'unité puisque la récupération du métal se fait en permanence en solution concentrée, ce qui évite toute limitation qui serait due à un quelconque transfert de matière.

## Revendications

1. Procédé de décontamination en continu d'un effluent liquide pollué par un ou plusieurs contaminants constitués par des cations (2) d'au moins un métal, dans lequel :
- on ajoute un premier complexant à l'effluent liquide pour former un premier sel complexe (6) dudit métal présentant une taille moléculaire minimale déterminée,
- on sépare l'effluent liquide du premier sel complexe sur une première membrane semi-perméable (9) dont le seuil de coupure est inférieur à la taille moléculaire minimale déterminée, pour former d'un coté un premier perméat (10) constituant l'effluent liquide décontaminé, et de l'autre coté un premier rétentat (11) contenant le premier sel complexe ainsi récupéré (12), et
- on réalise une électrolyse d'une solution issue du premier rétentat dite solution à électrolyser, pour récupérer ledit métal (29),
caractérisé en ce que, après la séparation entre l'effluent liquide et le premier sel complexe,
- on effectue une décomplexation du premier sel complexe récupéré (12), et
- on sépare le premier complexant ainsi récupéré (16) des cations (17) dudit métal sur une seconde membrane semi-perméable (20) dont le seuil de coupure est inférieur à la taille moléculaire minimale du premier complexant récupéré, pour former d'un coté un second rétentat (21) contenant ledit premier complexant récupéré (16) qu'on réutilise, et de l'autre coté un second perméat (23) pour donner ladite solution à électrolyser.

2. Procédé selon la revendication 1, caractérisé en ce que on effectue, après séparation du premier complexant récupéré (16) d'avec les cations (17) du métal, une seconde complexation desdits cations par ajout (25) d'un second complexant propre à favoriser la vitesse d'épuration par électrolyse du second sel complexe ainsi formé (26) et on récupère le second complexant (26') à partir de ladite électrolyse, qu'on réutilise pour ladite seconde complexation.

3. Application du procédé selon la revendication 2, à la récupération du Nickel.

4. Procédé selon la revendication 1, caractérisé en ce que on effectue, simultanément à la décomplexation du premier complexant, une seconde complexation des cations dudit métal par ajout (34) d'un second complexant propre à favoriser la vitesse d'épuration par électrolyse du second sel complexe ainsi formé (26), avant séparation du premier complexant (16) d'avec ledit second sel complexe (26) sur la seconde membrane (20) pour former ladite solution à électrolyser, et on récupère le second complexant (26') à partir de l'électrolyse, qu'on réutilise pour ladite seconde complexation.

5. Application du procédé selon la revendication 4, à la récupération du Zinc.

6. Procédé selon la revendication 1, caractérisé en ce que on réalise l'électrolyse directement à partir du second perméat contenant les cations (17) dudit métal obtenus à partir de la séparation entre le premier complexant (16) et lesdits cations (17).

7. Application du procédé selon la revendication 6, à la récupération du Cuivre.

8. Procédé selon l'une quelconque des revendications précédentes, caractérisé en ce que la séparation se fait au moins en partie par ultra-filtration.

9. Procédé selon l'une quelconque des revendications 1 à 7, caractérisé en ce que la séparation se fait au moins en partie par osmose inverse.

10. Procédé selon l'une quelconque des revendications 1 à 7, caractérisé en ce que la séparation se fait au moins en partie par nano-filtration.

11. Procédé selon l'une quelconque des revendications précédentes caractérisé en ce que on réalise des décontaminations sélectives en complexant préférentiellement un type de cations métalliques par rapport à un autre.

12. Dispositif (1,32) de décontamination en continu d'un effluent liquide pollué par un ou plusieurs contaminants constitués par des cations (2) d'au moins un métal, comprenant
- des moyens (3) d'alimentation en effluent d'un premier réacteur (4) de complexation,
- ledit premier réacteur (4) muni de moyens (5) d'introduction d'un premier complexant,
- des moyens (7) de transfert de l'effluent porteur des cations dudit métal complexés dans le premier réacteur ou premier sel complexe (6) à une première unité (8) de séparation entre effluent liquide et premier sel complexe,
- ladite première unité (8) de séparation comprenant une membrane semi-perméable (9) dont le seuil de coupure est inférieur à la taille moléculaire minimale dudit premier sel complexe, pour former d'un coté un premier perméat liquide décontaminé (10), et de l'autre côté un premier rétentat (11) contenant le premier sel complexe,
- des moyens (13) d'évacuation dudit premier perméat décontaminé,
- des moyens (14) de transfert dudit premier rétentat vers une cuve (28) à électrolyse,
- ladite cuve (28) à électrolyse, et
- des moyens de récupération dudit métal à partir de ladite cuve à électrolyse,
caractérisé en ce qu'il comporte
- une unité (15,33) de décomplexation du premier sel complexe,
- une seconde unité (19) de séparation du premier complexant (16) ainsi récupéré des cations (17,26) dudit métal sur une seconde membrane semi-perméable (20) dont le seuil de coupure est inférieur à la taille moléculaire minimale du premier complexant récupéré, pour former d'un coté un second rétentat (21) contenant le premier complexant récupéré, et de l'autre coté un second perméat (23),
- des moyens (30) de recyclage du second complexant ainsi récupéré et,
- des moyens (27) de transfert dudit second perméat vers ladite cuve (28) à électrolyse.

13. Dispositif selon la revendication 12, caractérisé en ce que la cuve à électrolyse est mono-compartiment.

14. Dispositif selon l'une quelconque des revendications 12 et 13, caractérisé en ce qu'il comporte un second réacteur (24) de complexation des cations, muni de moyens (25) d'introduction d'un second complexant propre à favoriser la vitesse d'épuration par électrolyse du second sel complexe ainsi formé et,
- des moyens (30) de recyclage du second complexant à partir de ladite électrolyse.

15. Dispositif selon l'une quelconque des revendications 12 et 13, caractérisé en ce que l'unité de décomplexation (33) comporte des moyens (34) d'introduction d'un second complexant propre à favoriser la vitesse d'épuration par électrolyse du second sel complexe (26) ainsi formé, la seconde unité de séparation étant alors agencée pour séparer le premier complexant récupéré du second sel complexe, et
- des moyens (30) de recyclage du second complexant à partir de ladite électrolyse.

16. Dispositif selon l'une quelconque des revendications 12 et 13, caractérisé en ce que il comporte des moyens (31) de transfert direct du second perméat contenant les cations dudit métal obtenus à partir de la seconde unité (19) de séparation, à la cuve (28) d'électrolyse.

17. Dispositif selon l'une quelconque des revendications 12 à 16, caractérisé en ce que il comporte, de plus, au moins une unité de complexation supplémentaire permettant de récupérer sélectivement au moins un type supplémentaire de cations métalliques à partir d'un même effluent liquide.

## Claims

1. Process for continuous decontamination of a liquid effluent polluted by one or more contaminants consisting of cations (2) of at least one metal, in which:
- a first complexant is added to the liquid effluent to form a first complex salt (6) of the said metal exhibiting a determined minimum molecular size,
- the liquid effluent is separated from the first complex salt on a first semipermeable membrane (9) whose cutoff threshold is lower than the determined minimum molecular size, to form, on one side, a first permeate (10) constituting the decontaminated liquid effluent and, on the other side, a first retentate (11) containing the first complex salt thus recovered (12), and
- an electrolysis of a solution originating from the first retentate, called solution to be electrolysed, is carried out, to recover the said metal (29),
characterized in that, after the separation between the liquid effluent and the first complex salt,
- a decomplexing of the first complex salt recovered (12) is performed, and
- the first complexant thus recovered (16) is separated from the cations (17) of the said metal on a second semipermeable membrane (20) whose cutoff threshold is lower than the minimum molecular size of the first complexant recovered, to form, on one side, a second retentate (21) containing the said recovered first complexant (16), which is reemployed, and, on the other side, a second permeate (23) to give the said solution to be electrolysed.

2. Process according to Claim 1, characterized in that, after separation of the recovered first complexant (16) from the cations (17) of the metal, a second complexing of the said cations is performed by adding (25) a second complexant suited to promoting the speed of purification by electrolysis of the second complex salt thus formed (26) and the second complexant (26') is recovered from the said electrolysis, which is reemployed for the said second complexing.

3. Application of the process according to Claim 2 to the recovery of nickel.

4. Process according to Claim 1, characterized in that simultaneously with the decomplexing of the first complexant, a second complexing of the cations of the said metal is performed by adding (34) a second complexant suited to promoting the speed of purification by electrolysis of the second complex salt thus formed (26), before separation of the first complexant (16) from the said second complex salt (26) on the second membrane (20), to form the said solution to be electrolysed, and
the second complexant (26') is recovered from the electrolysis, which is reemployed for the said second complexing.

5. Application of the process according to Claim 4 to the recovery of zinc.

6. Process according to Claim 1, characterized in that the electrolysis is carried out directly starting with the second permeate containing the cations (17) of the said metal which are obtained from the separation between the first complexant (16) and the said cations (17).

7. Application of the process according to Claim 6 to the recovery of copper.

8. Process according to any one of the preceding claims, characterized in that the separation is done at least partially by ultrafiltration.

9. Process according to any one of Claims 1 to 7, characterized in that the separation is done at least partially by reverse osmosis.

10. Process according to any one of Claims 1 to 7, characterized in that the separation is done at least partially by nanofiltration.

11. Process according to any one of the preceding claims, characterized in that selective decontaminations are carried out by complexing one type of metal cations preferentially in relation to another.

12. Device (1, 32) for continuous decontamination of a liquid effluent polluted by one or more contaminants consisting of cations (2) of at least one metal, including
- means (3) for feeding effluent to a first complexing reactor (4),
- the said first reactor (4) provided with means (5) for introducing a first complexant,
- means (7) for transfer of the effluent carrying the complexed cations of the said metal in the first reactor or first complex salt (6) to a first unit (8) for separation between liquid effluent and first complex salt,
- the said first unit (8) for separation including a semipermeable membrane (9) whose cutoff threshold is lower than the minimum molecular size of the said first complex salt, to form, on one side, a first decontaminated liquid permeate (10) and, on the other side, a first retentate (11) containing the first complex salt,
- means (13) for evacuating the said decontaminated first permeate,
- means (14) for transfer of the said first retentate towards an electrolysis tank (28),
- the said electrolysis tank (28), and
- means for recovering the said metal from the said electrolysis tank,
characterized in that it comprises
- a unit (15, 33) for decomplexing the first complex salt,
- a second unit (19) for separating the first complexant (16) thus recovered from the cations (17, 26) of the said metal on a second semipermeable membrane (20) whose cutoff threshold is lower than the minimum molecular size of the recovered first complexant, to form, on one side, a second retentate (21) containing the recovered first complexant and, on the other side, a second permeate (23),
- means (30) for recycling the second complexant thus recovered, and
- means (27) for transfer of the said second permeate towards the said electrolysis tank (28).

13. Device according to Claim 12, characterized in that the electrolysis tank is single-compartment.

14. Device according to either of Claims 12 and 13, characterized in that it comprises a second reactor (24) for complexing the cations, provided with means (25) for introducing a second complexant suited to promoting the speed of purification by electrolysis of the second complex salt thus formed, and
- means (30) for recycling the second complexant from the said electrolysis.

15. Device according to either of Claims 12 and 13, characterized in that the decomplexing unit (33) comprises means (34) for introducing a second complexant suited to promoting the speed of purification by electrolysis of the second complex salt (26) thus formed, the second separating unit being then arranged in order to separate the recovered first complexant from the second complex salt, and
- means (30) for recycling the second complexant from the said electrolysis.

16. Device according to either of Claims 12 and 13, characterized in that it comprises means (31) for direct transfer of the second permeate containing the cations of the said metal which are obtained from the second separating unit (19) to the electrolysis tank (28).

17. Device according to any one of Claims 12 to 16, characterized in that it additionally comprises at least one additional complexing unit making it possible to recover selectively at least one additional type of metal cations from the same liquid effluent.

## Patentansprüche

1. Verfahren zur kontinuierlichen Dekontaminierung einer Ablaufflüssigkeit, die mit einem oder mehreren Schmutzstoffen verunreinigt ist, die aus Kationen (2) mindestens eines Metalls bestehen, in dem:
- der Ablaufflüssigkeit ein erster Komplexbildner zugegeben wird, um ein erstes Komplexsalz (6) des genannten Metalls zu bilden, das eine bestimmte minimale Molekülgröße besitzt,
- die Ablaufflüssigkeit vom ersten Komplexsalz auf einer ersten semipermeablen Membran (9) getrennt wird, deren Trennschwelle kleiner ist als die bestimmte minimale Molekülgröße, um einerseits ein erstes Permeat (10) zu bilden, das die dekontaminierte Ablaufflüssigkeit darstellt, und andererseits einen ersten Rückstand (11), der das auf diese Weise zurückgewonnene erste Komplexsalz (12) enthält, und
- eine Elektrolyse einer vom ersten Rückstand erhaltenen Lösung durchgeführt wird, die Elektrolyselösung genannt wird, um das Metall (29) zurückzugewinnen,
dadurch gekennzeichnet, daß nach der Trennung zwischen der Ablaufflüssigkeit und dem ersten Komplexsalz
- eine Dekomplexierung des ersten zurückgewonnenen Komplexsalzes (12) vorgenommen wird, und
- der auf diese Weise zurückgewonnene erste Komplexbildner (16) von Kationen (17) des genannten Metalls auf einer zweiten semipermeablen Membran (20) getrennt wird, deren Trennschwelle kleiner ist als die minimale Molekülgröße des ersten zurückgewonnenen Komplexbildners, um einerseits einen zweiten Rückstand (21) zu bilden, der den zurückgewonnenen ersten Komplexbildner (16) enthält, der wiederverwendet wird, und andererseits ein zweites Permeat (23), der die Elektrolyselösung ergibt.

2. Verfahren nach Anspruch 1, dadurch gekennzeichnet, daß nach Abtrennung des ersten zurückgewonnenen Komplexbildners (16) von den Kationen (17) des Metalls, eine zweite Komplexierung der Kationen durch Zugabe (25) eines zweiten Komplexbildners vorgenommen wird, der geeignet ist, die Reinigungsgeschwindigkeit durch Elektrolyse des gebildeten zweiten Komplexsalzes (26) zu begünstigen und der zweite Komplexbildner (26') wird aus der Elektrolyse zurückgewonnen, der für die zweite Komplexierung wiederverwendet wird.

3. Anwendung des Verfahrens nach Anspruch 2 zur Rückgewinnung von Nickel.

4. Verfahren nach Anspruch 1, dadurch gekennzeichnet, daß gleichzeitig zur Dekomplexierung des ersten Komplexbildners eine zweite Komplexierung der Kationen des Metalls vorgenommen wird durch Zugabe (34) eines zweiten Komplexbildners, der geeignet ist, die Reinigungsgeschwindigkeit durch Elektrolyse des gebildeten zweiten Komplexsalzes (26) zu begünstigen, bevor der erste Komplexbildner (16) vom zweiten Komplexsalz (26) auf der zweiten Membran (20) abgetrennt wird, um die Elektrolyselösung zu bilden, und
der zweite Komplexbildner (26') wird aus der Elektrolyse zurückgewonnen, der für die zweite Komplexierung wiederverwendet wird.

5. Anwendung des Verfahrens nach Anspruch 4 zur Rückgewinnung von Zink.

6. Verfahren nach Anspruch 1, dadurch gekennzeichnet, daß die Elektrolyse direkt vom zweiten Permeat durchgeführt wird, das die Kationen (17) des Metalls enthält, die aus der Trennung zwischen dem ersten Komplexbildner (16) und den Kationen (17) erhalten wurde.

7. Anwendung des Verfahrens nach Anspruch 6 zur Rückgewinnung von Kupfer.

8. Verfahren nach einem der vorhergehenden Ansprüche, dadurch gekennzeichnet, daß die Abtrennung mindestens teilweise durch Ultrafiltration erfolgt.

9. Verfahren nach einem der Ansprüche 1 bis 7, dadurch gekennzeichnet, daß die Abtrennung mindestens teilweise durch Umkehrosmose erfolgt.

10. Verfahren nach einem der Ansprüche 1 bis 7, dadurch gekennzeichnet, daß die Abtrennung mindestens teilweise durch Nanofiltration erfolgt.

11. Verfahren nach einem der vorhergehenden Ansprüche, dadurch gekennzeichnet, daß selektive Dekontaminierungen durch Komplexieren bevorzugt einer Art von Metallkationen in Bezug auf eine andere durchgeführt werden.

12. Vorrichtung (1, 32) zum kontinuierlichen Dekontaminieren einer Ablaufflüssigkeit, die mit einem oder mehreren Schmutzstoffen verunreinigt ist, die aus Kationen (2) mindestens eines Metalls bestehen, umfassend
- Mittel (3) zur Zuführung eines Ablaufs in einen ersten Komplexierungsreaktor (4),
- wobei der erste Reaktor (4) mit Mitteln (5) zur Einführung eines ersten Komplexbildners versehen ist,
- Mittel (7) zum Überführen des Ablaufs, der im ersten Reaktor komplexierte Kationen des Metalls trägt oder des ersten Komplexsalzes (6) in eine erste Einheit (8) zur Trennung zwischen der Ablaufflüssigkeit und dem ersten Komplexsalz,
- wobei die erste Trenneinheit (8) eine semipermeable Membran (9) umfaßt, deren Trennschwelle kleiner ist als die minimale Molekülgröße des ersten Komplexsalzes, so daß sich einerseits ein erstes dekontaminiertes flüssiges Permeat (10) bildet und andererseits ein erster Rückstand (11), der das erste Komplexsalz enthält,
- Mittel (13) zum Entleeren des ersten dekontaminierten Permeats,
- Mittel (14) zum Überführen des ersten Rückstandes zu einem Elektrolysegefäß (28),
- das Elektrolysegefäß (28), und
- Mittel zur Rückgewinnung des Metalls aus dem Elektrolysegefäß,
dadurch gekennzeichnet, daß sie umfaßt
- eine Einheit (15, 33) zur Dekomplexierung des ersten Komplexsalzes,
- eine zweite Einheit (19) zur Trennung des zurückgewonnenen ersten Komplexbildners (16) der Kationen (17, 26) des Metalls auf einer zweiten semipermeablen Membran (20), deren Trennschwelle kleiner ist als die minimale Molekülgröße des ersten zurückgewonnenen Komplexbildners, so daß sich einerseits ein zweiter Rückstand (21) bildet, der den ersten zurückgewonnenen Komplexbildner enthält, und andererseits ein zweites Permeat (23),
- Mittel (30) zum Recyceln des zurückgewonnenen zweiten Komplexbildners und
- Mittel (27) zum Überführen des zweiten Permeats zum Elektrolysegefäß (28).

13. Vorrichtung nach Anspruch 12, dadurch gekennzeichnet, daß das Elektrolysegefäß einzellig ist.

14. Vorrichtung nach Anspruch 12 oder 13, dadurch gekennzeichnet, daß sie einen zweiten Komplexierungsreaktor (24) für Kationen umfaßt, versehen mit Mitteln (25) zum Einführen eines zweiten Komplexbildners, der geeignet ist, die Reinigungsgeschwindigkeit durch Elektrolyse des zweiten gebildeten Komplexsalzes zu begünstigen, und
- Mittel (30) zum Recyceln des zweiten Komplexbildners aus der Elektrolyse.

15. Vorrichtung nach Anspruch 12 oder 13, dadurch gekennzeichnet, daß die Dekomplexierungseinheit (33) Mittel (34) zum Einführen eines zweiten Komplexierungsmittels umfaßt, das geeignet ist, die Reinigungsgeschwindigkeit durch Elektrolyse des zweiten gebildeten Komplexsalzes (26) zu begünstigen, wobei die zweite Trenneinheit zum Trennen des ersten zurückgewonnenen Komplexbildners vom zweiten Komplexsalz eingerichtet ist, und
- Mittel (30) zum Recyceln des zweiten Komplexbildners aus der Elektrolyse.

16. Vorrichtung nach Anspruch 12 oder 13, dadurch gekennzeichnet, daß sie Mittel (31) zum direkten Überführen des zweiten Permeats, das die Kationen des Metalls enthält, die aus der zweiten Trenneinheit (19) erhalten wurden, zum Elektrolysegefäß (28) umfaßt.

17. Vorrichtung nach einem der Ansprüche 12 bis 16, dadurch gekennzeichnet, daß sie außerdem mindestens eine zusätzliche Komplexierungseinheit umfaßt, die es ermöglicht, selektiv mindestens eine zusätzliche Art von Metallkationen aus derselben Ablaufflüssigkeit zurückzugewinnen.
